Europäisches Patentamt

European Patent Office

Office européen des brevets

(19)

(11) Veröffentlichungsnummer: **0 262 630**
**B1**

# EUROPÄISCHE PATENTSCHRIFT

(12)

(45) Veröffentlichungstag der Patentschrift:
07.03.90

(21) Anmeldenummer: 87114097.6

(22) Anmeldetag: 26.09.87

(51) Int. Cl.⁴: **C14C 11/00, C08H 1/00**

(54) **Verfahren zur Vernetzung von Kaseinfilmen in der Lederzurichtung.**

(30) Priorität: 03.10.86 DE 3633643

(43) Veröffentlichungstag der Anmeldung:
06.04.88 Patentblatt 88/14

(45) Bekanntmachung des Hinweises auf die Patenterteilung:
07.03.90 Patentblatt 90/10

(84) Benannte Vertragsstaaten:
AT CH DE ES FR GB IT LI NL

(56) Entgegenhaltungen:
DE-A- 3 127 598
DE-A- 3 332 571
GB-A- 582 235

CHEMICAL ABSTRACTS, Band 66, 1967,
Seiten 2896-2897, Zusammenfassung Nr. 30038y,
Columbus, Ohio, US

(73) Patentinhaber: BASF Aktiengesellschaft,
Carl-Bosch-Strasse 38, D-6700 Ludwigshafen(DE)

(72) Erfinder: Fischer, Karl, Auf dem Koeppel 58, D-6702 Bad
Dürkheim(DE)
Erfinder: Eckert, Günter, Dr., Flossbachstrasse 1,
D-6703 Limburgerhof(DE)
Erfinder: Lach, Dietrich, Dr., Gartenweg 16,
D-6701 Friedelsheim(DE)

ACTORUM AG

## Beschreibung

Die Erfindung betrifft ein Verfahren zur Vernetzung von Kaseinfilmen, aufgetragen beispielsweise als Grundierungs- und Appreturschichten in der Lederzurichtung, bei dem man die Vernetzung des Kaseins mit Hilfe von wasserlöslichen Kondensationsprodukten aus Melamin und/oder Harnstoff mit Formaldehyd und ggfs. Glyoxal, wobei vorhandene Methylolgruppen durch einen niederen Alkohol verethert sein können, ohne die Verwendung eines sauren Katalysators durchführt.

Es ist bekannt, daß man Leder, besonders Kleintierfelle und Kalbfelle, deren Zurichtung einen hohen Glanz und einen natürlichen Griff haben sollen, mit Kasein als Bindemittel zurichtet. Das aufgebrachte Kasein hat jedoch nur eine geringe Beständigkeit gegenüber Wasser und schützt somit das Leder nicht ausreichend vor Beschädigung. Aus diesem Grund wird der auf das Leder aufgebrachte Kaseinfilm beispielsweise mit Formaldehydlösung vernetzt, wodurch er, insbesondere wenn die Fixierung mit Essigsäure katalysiert wird, ausreichend beständig gegen Feuchtigkeit wird. Die Verwendung von Formaldehyd ist nachteilig, da sie eine starke Geruchsbelästigung und Reizung der Schleimhäute mit sich bringt.

In der DE-OS 33 32 571 wird ein Verfahren zur Zurichtung von Leder mit Kasein-Filmen beschrieben, bei dem als Vernetzungskomponente für das Kasein nicht mehr Formaldehyd, sondern Hexamethylolmelaminhexamethylether in Gegenwart von Ameisensäure und/oder eines Komplexes aus Weinsäure und Borsäure als saurer Katalysator verwendet wird. Dieses Verfahren führt nicht nur zu einer geringeren Belastung der Umwelt sondern auch zu einer im Vergleich zu Formaldehyd besseren Beständigkeit des Kaseinfilms gegenüber Feuchtigkeit. Aus der DE-OS 33 32 571 geht hervor, daß für die Vernetzung, um brauchbare Ergebnisse zu erhalten, ein saurer Katalysator, der in einem besonderen Arbeitsgang aufgetragen wird, verwendet werden muß.

Weiterhin ist aus der DE-OS 31 27 598 ein Verfahren zur Fixierung, d.h. Vernetzung, von Kaseinappreturen bekannt, bei dem als Vernetzer alkoximethylierte Harnstoffe und als saure Katalysatoren vorzugsweise Oxalsäure und insbesondere Schwefelsäure eingesetzt werden. Hauptnachteil dieses Verfahrens ist die Verwendung der korrosiven und stark hautreizenden Schwefelsäure.

Beide Verfahren haben keinen Eingang in die Praxis gefunden: Die Handhabung der Schwefelsäure als Vernetzungskatalysator empfiehlt sich wegen ihrer Aggresivität nicht. Die Weinsäure-Borsäure-Komplexe können unter Umständen auf der Lederoberfläche einen weißen Belag bilden, während die Ergebnisse mit Ameisensäure als saurer Katalysator gegenüber Weinsäure-Borsäure-Komplexen bei sonst gleichen Verfahrensbedingungen in der Regel weniger befriedigend ausfallen.

Überraschenderweise wurde nun gefunden, daß auf die Verwendung von sauren Katalysatoren zur Vernetzung von Kaseinfilmen völlig verzichtet werden kann, wenn man in ganz bestimmter Weise verfährt.

Wäßrige Mischungen aus Kasein und Formaldehyd-Kondensationsprodukten, ggfs. mit den an sich üblichen Zusätzen, werden auf das Leder in üblicher Weise aufgetragen, getrocknet und die Vernetzung wird bei höheren Temperaturen, beispielsweise durch einfaches Bügeln, durchgeführt. Anschließend kann in üblicher Weise glanzgestoßen werden.

Gegenstand der vorliegenden Anmeldung ist demnach ein Verfahren zur Vernetzung von Kaseinfilmen bei der Lederzurichtung, insbesondere zur Herstellung glanzgestoßener Leder, bei dem man das Kasein zusammen mit wasserlöslichen Kondensationsprodukten aus Melamin und/oder Harnstoff mit Formaldehyd und ggfs. Glyoxal, wobei vorhandene Methylolgruppen ggfs. durch einen niederen Alkohol verethert sein können, schichtensweise aufträgt, nach jedem Auftrag bei Temperaturen von 20 bis 80°C trocknet und die Vernetzung durch eine einmalige bis dreimalige Temperaturbehandlung ohne saure Katalysatoren bei Temperaturen von 140 bis 200°C, bevorzugt 165 bis 180°C, und einer jeweiligen Dauer von 0,1 bis 5 sec, bevorzugt 0,5 bis 3 sec, durchführt.

Nach dem erfindungsgemäßen Verfahren wird die wäßrige Lösung des Kaseins mit den zur Vernetzung verwendeten Kondensationsprodukten in Form einer wäßrigen Mischung bzw. Lösung in an sich üblicher Weise, vorzugsweise durch Aufsprühen, auf das Leder aufgetragen. Diese Mischung enthält 0,75 bis 7,5 Gew.% Kasein und 0,7 bis 13 Gew.%, bevorzugt 2,5 bis 8,0 Gew.% Kondensationsprodukt.

Diese Mischung kann die üblichen Zusätze, und gegebenenfalls weitere Hilfsmittel, wie sie in der Zurichtung von Leder verwendet werden, enthalten. Nach jedem Auftrag wird bei Temperaturen von 20 bis 80°C getrocknet.

Es werden zweckmäßigerweise pro Auftrag 50 bis 125 g, bevorzugt 60 bis 100 g Mischung pro m² Leder, bezogen auf das Trockengewicht des Kaseins und des verwendeten Vernetzers sind das 0,7 bis 25,7, bevorzugt 0,9 bis 20,5 g/m² Leder, aufgetragen.

In der Regel werden eins bis sechs Aufträge als Grundierung und anschließend eins bis drei Aufträge als Appretur aufgetragen.

Normalerweise werden auf das Leder zwei Schichten als Grundierung aufgetragen, wobei nach jedem Auftrag getrocknet wird. Danach werden zwei Schichten als Appretur aufgetragen, die in gleicher Weise anschließend getrocknet werden.

Die als Grundierung und als Appretur aufgetragenen Mischungen unterscheiden sich in der Regel in ihrer Zusammensetzung nur dadurch, daß die Grundierung einen weicheren Film bildet, der stärker pigmentiert ist als die Appretur, die ihrerseits einen härteren Film bildet und dadurch einen höheren Glanz liefert.

Dabei ist ein Zwischenbügeln bei höheren Temperaturen, beispielsweise nach dem Auftragen der einzelnen Schichten der Grundierung, nicht erforderlich.

Nach der Abschlußtrocknung wird in der praktischen Ausführung durch ein- bis dreimaliges heißes Bügeln unter den oben angegebenen Bedingungen die Vernetzung herbeigeführt.

Zur Herstellung der aufzutragenden Lösungen bzw. Mischungen werden die handelsüblichen kolloidalen Kasein-Lösungen mit 8 bis 25 Gew.% Kasein verwendet.

Bei den als Vernetzer verwendeten Kondensationsprodukten aus Melamin und/oder Harnstoff mit Formaldehyd und ggfs. Glyoxal, deren Methylolgruppen ggfs. ganz oder teilweise verethert sein können, handelt es sich um die üblichen im Handel erhältlichen Lösungen bzw. Reaktionsmischungen dieser Kondensationsprodukte oder um ihre Trockenpulver. Die verwendeten Kondensationsprodukte sollen in Wasser oder in Mischungen aus Wasser und n-Propanol (1:1) klare oder leicht trübe kolloidale Lösungen geben. Bevorzugt werden die käuflichen wäßrigen Lösungen mit Feststoffgehalten von 30 bis 70 Gew.% verwendet.

Die als Vernetzer verwendeten Kondensationsprodukte können beispielsweise wie folgt charakterisiert werden:

Kondensationsprodukte auf Basis von Harnstoff sind Reaktionsmischungen, die durch Umsetzung von 1 Mol Harnstoff mit 1,6 bis 4, vorzugsweise 1,8 bis 2,8 Mol Formaldehyd erhalten werden. Gegebenenfalls können die vorhandenen Methylolgruppen durch Umsetzung mit Methanol oder Ethanol verethert sein.

Diese lassen sich leicht in einen Zurichtansatz mit Kasein einarbeiten, ohne daß sofort eine Reaktion mit dem Kasein eintritt. Ihre vernetzten Zurichtefilme weisen einen hohen Glanz auf

Es hat sich gezeigt, daß bei Verwendung von Harnstoff-Formaldehyd-Glyoxal-Kondensationsprodukten dieser Glanz noch gesteigert werden kann. Zweckmäßige Kondensationsprodukte sind die Umsetzungsprodukte von 1 Mol Harnstoff mit 2 bis 3,5 Mol Formaldehyd und 0,1 bis 1,5 Mol Glyoxal. Ganz besonders bevorzugt ist ein Kondensationsprodukt aus 1 Mol Harnstoff, 3 Mol Formaldehyd und 0,5 Mol Glyoxal.

Von den Melaminderivaten haben sich besonders Kondensationsprodukte aus 1 Mol Melamin und 2 bis 6 Mol Formaldehyd, bevorzugt 2,2 bis 5,5 Mol Formaldehyd bewährt. Für die Glanzbildung ist es vorteilhaft, wenn die Methylolgruppen in veretherter Form, insbesondere als Methylether, vorliegen. Besonders bevorzugt sind daher die Umsetzungsprodukte von 1 Mol Melamin und 2,2 bis 6 Mol Formaldehyd und 2,2 bis 6 Mol Methanol. Hiervon sind im einzelnen zu nennen der Hexamethylolmelaminhexamethylether und das Kondensationsprodukt aus 1 Mol Melamin, 5,5 Mol Formaldehyd und 5,5 Mol Methanol, wie sie im Handel in ihren wäßrigen Lösungen mit einem Trockengehalt von 30 bis 70 Gew.% oder in Pulverform erhältlich sind.

Diese Vernetzer bewirken nicht nur einen hohen Glanz des Zurichtefilms sondern lassen sich auch bei Raumtemperaturen problemlos in den Zurichtansatz einarbeiten, insbesondere wenn die wäßrigen Lösungen vorliegen. Falls sich Schwierigkeiten beim Lösen der Pulverform ergeben, werden zweckmäßigerweise warmes Wasser von ca. 40°C oder Mischungen mit 1 bis 4 Teilen Wasser und 1 Teil n-Propanol verwendet.

Weiterhin haben sich Melamin-Harnstoff-Formaldehyd-Kondensationsprodukte, die durch Umsetzung von 1 Mol Melamin, 0,1 bis 0,6 Mol Harnstoff, 2,5 bis 3,8 Mol Formaldehyd und ggfs. 0,5 bis 3,8 Mol Methanol zur Veretherung erhalten werden, bewährt.

Weiterhin sind Melamin-Formaldehyd-Glyoxal-Kondensationsprodukte aus 1 Mol Melamin, 1,4 bis 3,5 Mol Formaldehyd und 0,2 bis 1 Mol Glyoxal zu nennen.

Alle die genannten Vernetzer geben gute Vernetzungen, die durch Prüfung der Naßreibechtheit nach IUF 450 und der Flexibilität nach IUP 20 der erhaltenen Leder nachgewiesen werden kann.

In der Regel werden zur Herstellung der aufzutragenden Lösungen bzw. Mischungen der Vernetzer in ihren 30 bis 70 gew.%igen wäßrige Lösungen oder in Pulverform verwendet. Bezogen auf das Trockengewicht der Vernetzer werden sie in Mengen auf 7 bis 130, vorzugsweise 25 bis 80 und ganz besonders bevorzugt 40 bis 65 Teile auf 7,5 bis 75 Teile Kasein in 1000 Teile Zurichtansatz verwendet.

Die Zurichteansätze können die üblichen Zusätze enthalten, beispielsweise zur Farbgebung lösliche Farbstoffe und/oder Pigmentpräparationen, zur Verbesserung des Bügelverhaltens und zur Verbesserung des Griffs, Öl- oder Wachsemulsionen und ggfs. weitere Hilfsmittel, wie sie bei der Zurichtung von Leder verwendet werden können.

Die besonders hervorzuhebenden Vorteile einer Zurichtung nach dem erfindungsgemäßen Verfahren sind: Das Auftragen eines sauren Katalysators kann überraschenderweise vermieden werden, das hat den Vorteil, daß das Leder weniger Säure enthält, die ein Brüchigwerden des Leders beschleunigen kann. Die verwendeten Maschinen werden geschont, da mit weniger korrosiven Stoffen gearbeitet wird, und die Umweltbelastung wird vermindert.

Entgegen der allgemeinen Auffassung, daß ein saurer Katalysator zur Vernetzung des Kaseins verwendet werden muß, wird eine gute Vernetzung, die sich durch hohe Naßreibechtheiten und gute Flexibilitätswerte nachweisen läßt, erreicht.

Bevorzugt werden glanzgestoßene Leder hergestellt, wobei das Glanzstoßen nach dem Heißbügeln, d.h. nach der durchgeführten Vernetzung der aufgetragenen Schichten, erfolgt. Das ist besonders vorteilhaft, weil die vernetzten Schichten beim Glanzstoßen nicht zum Schmieren neigen. Ggfs. kann nach dem Glanzstoßen ein Schlußbügeln erfolgen.

Die folgenden Beispiele sollen das erfindungsgemäße Verfahren näher erläutern. Die Teile sind, soweit nicht anders angegeben, Gewichtsteile.

Beispiel 1

60 Teile einer 70 gew.%igen wäßrigen Lösung eines Melaminharzes, erhalten durch Kondensation von 1 Mol Melamin, 5,5 Mol Formaldehyd und 5,5 Mol Methanol, werden in 660 Teile Wasser eingerührt. Danach werden unter weiterem Rühren noch 195 Teile einer handelsüblichen 20 gew.%igen Kaseinlösung, 20 Teile anionisch emulgiertes Erdnußöl, 5 Teile eines nichtionisch emulgierten Wachses, sowie je 30 Teile einer Farbstoff-Flüssigkeitseinstellung von C.I. Acid Black 63 und einer wäßrigen Pigmentpräparation von C.I. Pigment Black 7 zugegeben.

Diese Grundierungsmischung wird mittels einer Druckluftpistole durch 2 Spritzaufträge in einer Gesamtmenge von 150 g/m², das entspricht 12,2 g Feststoff, bezogen auf Kasein und Vernetzer/m², auf ein Ziegenleder gesprüht. Nach jedem Spritzauftrag wird bei 65°C getrocknet. Danach wird das Leder auf einer Steinwalze poliert.

Das so vorbereitete grundierte Leder wird anschließend mit einer Appretur der folgenden Zusammensetzung besprüht:
680 Teile Wasser,
80 Teile der oben genannten wäßrigen Melaminharzlösung,
200 Teile 15 gew.%ige wäßrige Kaseinlösung,
30 Teile anionisch emulgiertes Erdnußöl und
10 Teile Flüssigkeitseinstellung von Acid Black 63.

Diese Mischung wird in 2 Aufträgen auf das Leder gesprüht, wobei nach jedem Auftrag bei 65°C getrocknet wird. Die Auftragsmenge beträgt insgesamt 120 g/m², d.h. 10,3 g Feststoff, bezogen auf Kasein und Vernetzer, m².

Anschließend wird die Vernetzung auf der Durchlaufbügelmaschine bei 170°C durchgeführt. Die Kontaktzeit beträgt 0,5 sec. Danach wird glanzgestoßen und zur Erhöhung des Glanzes nochmals in gleicher Weise bei 170°C gebügelt.

Die fertig zugerichtete Lederoberfläche zeigt den gewünschten glatten Griff und hohen Glanz. Der vernetzte Film zeichnet sich durch außergewöhnlich gute Naßreibechtheit, gemessen nach IUF 450 und Flexibilität, gemassen nach IUP 20, aus.

Beispiel 2

60 Teile einer 75 gew.%igen wäßrigen Lösung eines Formaldehyd-Glyoxal-Harnstoff-kondensationsproduktes aus 1 Mol Harnstoff, 2,5 Mol Formaldehyd und 1 Mol Glyoxal werden mit 700 Teilen Wasser verdünnt. Danach werden 180 Teile einer 18 gew.%igen Kaseinlösung, 20 Teile Polyglykolether als Weichmacher, sowie je 20 Teile einer Flüssigeinstellung von C.I. Acid Black 63 und einer wäßrigen Pigmentpräparation von C.I. Pigment Black 7 zugestzt.

Diese Mischung wird mit Hilfe eines Plüschbrettes als Grundierung in einer Gesamtmenge von 150 g/m², das entspricht 11,6 g Feststoff, bezogen auf Kasein und Vernetzer/m², in 3 Aufträgen auf ein Kalbleder aufgetragen. Nach jedem Plüschauftrag wird bei 65°C getrocknet. Nach dem ersten Auftrag wird das Leder auf der Steinwalze poliert.

Das so vorbereitete, grundierte Kalbleder wird anschließend mit einer Mischung aus 680 Teilen Wasser, 60 Teilen der zur Grundierung verwendeten wäßrigen Formaldehyd-Glyoxal-Harnstoffharzlösung, 220 Teilen einer 20 gew.%igen wäßrigen Kaseinlösung, 30 Teilen Polyglykolether und 10 Teilen einer Flüssigkeitseinstellung von C.I. Acid Black 63 appretiert.

Diese Appreturmischung wird durch dreimaliges Plüschen mit jeweiligem Zwischentrocknen bei 65°C auf das Kalbsleder aufgebracht. Die gesamte Auftragsmenge beträgt 80 g/m², das entspricht 7 g Feststoff, bezogen auf Kasein und Vernetzer/m².

Danach erfolgt zweimaliges Bügeln auf einer Durchlaufbügelmaschine bei 170°C und einer Kontaktzeit von 1 sec. Nachfolgend wird das Kalbsleder auf der hydraulischen Bügelpresse bei 120°C geglättet.

Die so zugerichtete veredelte Lederoberfläche zeigt den gewünschten glatten Griff, einen sehr hohen Glanz, eine ausreichende Naßreibechtheit und gute Flexibilität.

Beispiele 3 bis 9

Bei den folgenden Beispielen wird gemäß Beispiel 1 gearbeitet. Wie aus der Tabelle hervorgeht werden die Vernetzer, die Bügeltemperatur, die Kontaktzeit und die Einsatzmenge des Vernetzer variiert, während Kasein und Zusatzstoffe unverändert bleiben.

Tabelle

| Beispiel | Vernetzer (Zusammensetzung in Mol) | | | | | Einsatzmengen[1] Grund./Appretur | Bügeltemperatur °C | Kontaktzeit sek | Naßreibelastizität (IUF 450) | Elastizität (IUP 20) | Glanz |
|---|---|---|---|---|---|---|---|---|---|---|---|
| | Melamin | Harnstoff | Form-aldehyd | Glyoxal | Methanol | | | | | | |
| 3 | 1 | – | 5,5 | – | 5,5 | 35/35 | 150 | 2×2 | gut | gut | hoch |
| 4 | – | 1 | 2,5 | 1 | – | 22,5/37,5 | 160 | 2×2 | befriedigend | gut | sehr hoch |
| 5 | 1 | – | 3,5 | – | – | 50/50 | 170 | 2×2 | sehr gut | befriedigend | seidig |
| 6 | – | 1 | 2,2 | – | – | 20/40 | 180 | 3×1 | gut | gut | hoch |
| 7 | 1 | 0,5 | 3,5 | – | 3,5 | 50/80 | 185 | 3×1 | gut | gut | hoch |
| 8 | 1 | 0,2 | 2,8 | – | 2,8 | 40/50 | 170 | 3×1 | gut | gut | hoch |
| 9 | 1 | – | 2 | 0,5 | – | 22,5/36 | 185 | 3×1 | ausreichend | gut | hoch |

[1] bezogen auf Teile Kondensationsprodukt als Feststoff in Grundierungs- und Appretiermischung pro 1000 Teile gemäß Beispiel 1.

**Patentansprüche**

1. Verfahren zur Vernetzung von Kaseinfilmen bei der Lederzurichtung, dadurch gekennzeichnet, daß man das Kasein zusammen mit wasserlöslichen Kondensationsprodukten aus Melamin und/oder Harnstoff mit Formaldehyd und ggfs. Glyoxal, wobei vorhandene Methylolgruppen ggfs. durch einen niederen Alkohol verethert sein können, schichtenweise aufträgt, nach jedem Auftrag bei Temperaturen von 20 bis 80°C trocknet, und die Vernetzung ohne die Gegenwart eines sauren Katalysators durch eine einmalige bis dreimalige Temperaturbehandlung bei Temperaturen von 140 bis 200°C und einer jeweiligen Dauer von 0,1 bis 5 Sekunden durchführt.

2. Verfahren nach Anspruch 1, dadurch gekennzeichnet, daß pro Auftrag eine wäßrige Mischung, die 0,75 bis 7,5 Gew.% Kasein und 0,7 bis 13 Gew.% Kondensationsprodukt gemäß Anspruch 1 enthält, in einer Menge von 50 bis 125 g/m² auf das Leder aufgetragen wird, wobei insgesamt 2 bis 9 Aufträge aufgebracht werden.

3. Verfahren zur Vernetzung von Kaseinfilmen bei der Lederzurichtung nach Anspruch 1 und 2, dadurch gekennzeichnet, daß man das Leder mit einer wäßrigen Mischung, die 0,75 bis 7,5 Gew.% Kasein, 0,7 bis 13 Gew.% des in Anspruch 1 definierten Kondensationsproduktes enthält, in einer Menge von 50 bis 125 g/m² beschichtet, den Auftrag bei 20 bis 80°C trocknet, diese Beschichtung nach jeweiliger Trocknung 1- bis 8-mal wiederholt und danach die Vernetzung ohne die Gegenwart eines sauren Katalysators durch eine einmalige bis dreimalige Temperaturbehandlung bei Temperaturen von 140 bis 200°C und einer jeweiligen Dauer von 0,1 bis 5 sec. durchführt.

4. Verfahren nach den Ansprüchen 1 bis 3, dadurch gekennzeichnet, daß man ein Kondensationsprodukt, erhalten durch Umsetzung von 1 Mol Harnstoff und 1,6 bis 4 Mol Formaldehyd, einsetzt.

5. Verfahren nach den Ansprüchen 1 bis 3, dadurch gekennzeichnet, daß man ein Kondensationsprodukt, erhalten durch Umsetzung von 1 Mol Harnstoff, 2,0 bis 3,5 Mol Formaldehyd und 0,1 bis 1,5 Mol Glyoxal, einsetzt.

6. Verfahren nach den Ansprüchen 1 bis 3, dadurch gekennzeichnet, daß man ein Kondensationsprodukt, erhalten durch Umsetzung von 1 Mol Melamin und 2 bis 6 Mol Formaldehyd, ggfs. verethert mit 2,2 bis 6 Mol Methanol, einsetzt.

7. Verfahren nach den Ansprüchen 1 bis 3, dadurch gekennzeichnet, daß man ein Kondensationsprodukt, erhalten durch Umsetzung von 1 Mol Melamin, 0,1 bis 0,6 Mol Harnstoff und 2,5 bis 3,8 Mol Formaldehyd ggfs. mit 0,5 bis 3,8 Mol Formaldehyd, ggfs. mit 0,5 bis 3,8 Mol Methanol verethert, einsetzt.

8. Verfahren nach den Ansprüchen 1 bis 3, dadurch gekennzeichnet, daß man ein Kondensationsprodukt, erhalten durch Umsetzung von 1 Mol Melamin, 1,4 bis 3,5 Mol Formaldehyd und 0,2 bis 1 Mol Glyoxal, einsetzt.

## Claims

1. A process for crosslinking casein films in leather finishing, wherein the casein is applied in layers together with a water-soluble condensate of melamine and/or urea with formaldehyde and, if appropriate, glyoxal and any methylol groups present may be etherified with a lower alcohol, drying is effected at from 20 to 80°C after each application, and crosslinking is carried out by from one to three heat treatments in the absence of an acidic catalyst at from 140 to 200°C for from 0.1 to 5 seconds in each case.

2. A process as claimed in claim 1, wherein an aqueous mixture which contains from 0.75 to 7.5% by weight of casein and from 0.7 to 13% by weight of a condensate as claimed in claim 1 is applied to the leather in an amount of from 50 to 125 g/m² per application, a total of from 2 to 9 applications being made.

3. A process for crosslinking casein films in leather finishing as claimed in claim 1 or 2, wherein the leather is coated with an aqueous mixture which contains from 0.75 to 7.5% by weight of casein and from 0.7 to 13% by weight of the condensate defined in claim 1, in an amount of from 50 to 125 g/m², the application is dried at from 20 to 80°C, this coating procedure is repeated from 1 to 8 times after each coating has dried, and crosslinking is then carried out by from one to three heat treatments in the absence of an acidic catalyst at from 140 to 200°C for from 0.1 to 5 sec in each case.

4. A process as claimed in any of claims 1 to 3, wherein a condensate obtained by reacting 1 mole of urea and from 1.6 to 4 moles of formaldehyde is used.

5. A process as claimed in any of claims 1 to 3, wherein a condensate obtained by reacting 1 mole of urea, from 2.0 to 3.5 moles of formaldehyde and from 0.1 to 1.5 moles of glyoxal is used.

6. A process as claimed in any of claims 1 to 3, wherein a condensate obtained by reacting 1 mole of melamine and from 2 to 6 moles of formaldehyde, and, if appropriate, etherified with from 2.2 to 6 moles of methanol, is used.

7. A process as claimed in any of claims 1 to 3, wherein a condensate obtained by reacting 1 mole of melamine, from 0.1 to 0.6 mole of urea and from 2.5 to 3.8 moles of formaldehyde, and, if appropriate, etherified with from 0.5 to 3.8 moles of methanol, is used.

8. A process as claimed in any of claims 1 to 3, wherein a condensate obtained by reacting 1 mole of melamine, from 1.4 to 3.5 moles of formaldehyde and from 0.2 to 1 mole of glyoxal is used.

## Revendications

1. Procédé de réticulation de films de caséine lors du finissage du cuir, caractérisé en ce qu'on applique par couches la caséine en même temps que des produits de condensation hydrosolubles de mélamine et/ou d'urée avec le formaldéhyde et éventuellement le glyoxal, les groupements méthylol présents pouvant éventuellement être éthérifiés par un alcool inférieur, on sèche après chaque application à des températures de 20 à 80°C, et on effectue la réticulation sans la présence d'un catalyseur acide par un traitement thermique effectué de 1 à 3 fois à des températures de 140 à 200°C et avec à chaque fois une durée de 0,1 à 5 secondes.

2. Procédé selon la revendication 1, caractérisé en ce que pour chaque application, on applique un mélange aqueux qui contient de 0,75 à 7,5% en poids de caséine et de 0,7 à 13% en poids de produit de condensation selon la revendication 1, à raison de 50 à 125 g/m² de cuir, en effectuant au total de 2 à 9 applications.

3. Procédé de réticulation de films de caséine lors du finissage du cuir selon les revendications 1 et 2, caractérisé en ce qu'on enduit le cuir avec un mélange aqueux qui contient de 0,75 à 7,5% en poids de caséine et 0,7 à 13% en poids du produit de condensation défini dans la revendication 1, à raison de 50 à 125 g/m², on sèche l'application à 20–80°C, on répète de 1 à 8 fois cette enduction après séchage correspondant et on effectue ensuite la réticulation sans la présence d'un catalyseur acide par un traitement thermique effectué de 1 à 3 fois à des températures de 140 à 200°C et avec à chaque fois une durée de 0,1 à 5 s.

4. Procédé selon les revendications 1 à 3, caractérisé en ce qu'on utilise un produit de condensation obtenu par réaction de 1 mole d'urée et de 1,6 à 4 moles de formaldéhyde.

5. Procédé selon les revendications 1 à 3, caractérisé en ce qu'on utilise un produit de condensation obtenu par réaction de 1 mole d'urée, de 2,0 à 3,5 moles de formaldéhyde et de 0,1 à 1,5 mole de glyoxal.

6. Procédé selon les revendications 1 à 3, caractérisé en ce qu'on utilise un produit de condensation obtenu par réaction de 1 mole de mélamine et de 2 à 6 moles de formaldéhyde, éventuellement éthérifié avec 2,2 à 6 moles de méthanol.

7. Procédé selon les revendications 1 à 3, caractérisé en ce qu'on utilise un produit de condensation obtenu par réaction de 1 mole de mélamine, de 0,1 à 0,6 mole d'urée et de 2,5 à 3,8 moles de formaldéhyde, éventuellement éthérifié avec 0,5 à 3,8 moles de méthanol.

8. Procédé selon les revendications 1 à 3, caractérisé en ce qu'on utilise un produit de condensation obtenu par réaction de 1 mole de mélamine, de 1,4 à 3,5 moles de formaldéhyde et de 0,2 à 1 mole de glyoxal.